Europäisches Patentamt

(19) European Patent Office

Office européen des brevets

(11) Publication number: **0 007 902**
**B1**

(12) **EUROPEAN PATENT SPECIFICATION**

(45) Date of publication of patent specification: **11.05.83**

(21) Application number: **79900037.7**

(22) Date of filing: **13.12.78**

(86) International application number:
**PCT/JP78/00052**

(87) International publication number:
**WO 79/00400 12.07.79 Gazette 79/14**

(51) Int. Cl.³: **G 11 B 7/08,** G 11 B 7/12,
G 02 B 7/11

(54) **AUTOMATIC FOCUSING SYSTEM.**

(30) Priority: 16.12.77 JP 152086/77
16.12.77 JP 152087/77
17.01.78 JP 4013/78
31.01.78 JP 10216/78

(43) Date of publication of application:
**06.02.80 Bulletin 80/3**

(45) Publication of the grant of the patent:
**11.05.83 Bulletin 83/19**

(84) Designated Contracting States:
**DE FR GB**

(56) References cited:
**FR - A - 2 251 876**
**FR - A - 2 360 957**
**GB - A - 1 512 037**
**JP - A - 49 181 427**
**JP - A - 50 132 939**
**JP - A - 51 094 841**
**JP - A - 51 126 846**
**US - A - 3 941 945**

(73) Proprietor: **MITSUBISHI DENKI KABUSHIKI
KAISHA**
**2-3, Marunouchi 2-chome Chiyoda-ku**
**Tokyo 100 (JP)**

(72) Inventor: **OKADA, Kazuo Mitsubishi Denki
Kabushiki Kaisha
Oyokiki Kenkyusho 80, Azanakano
Minamishimizu
Amagasaki-shi, Hyogo 661 (JP)**
Inventor: **KONDO,Mitsushige Mitsubishi Denki
Kabushiki Kaisha
Oyokiki Kenkyusho 80, Azanakano
Minamishimizu
Amagasaki-shi, Hyogo 661 (JP)**

(74) Representative: **Wächtershäuser, Günter, Dr.
Tal 29
D-8000 München 2 (DE)**

(56) References cited:
**ELECTRONICS, vol. 49, no. 18, September 2,
1976 New York (US) "Hitachi Simplifies Video-
Disk Pickup with Semiconductor Laser and
Mirrors", pages 10E, 11E.**

Courier Press, Leamington Spa, England.

The present invention relates to an automatic focusing apparatus with a focusing lens for focusing radiation from a source onto a substrate, a vibrating device for vibrating the focal spot with a predetermined frequency in the direction of the optical axis, an oscillator for energizing the vibrating device, a phase detector for comparing the radiation reflected from the substrate with a reference signal derived from the oscillator, and an actuator which maintains coincidence between the focal spot and the surface of the substrate by positioning the lens in response to the output signal of the phase detector. Such a focusing apparatus is known from French patent 22 51 876. The focusing lens is used both as a vibrating device for vibrating the focal spot and as a positioning device for positioning the focal spot. This leads to the danger of a mechanical interference of both movements with the consequence of reduced reliability and accuracy. Further, the costs of the mechanical drive are quite high.

JP—A—51—94841 and JP—A—51—126846 describe a semiconductor laser whose radiation is focused onto a mirror, and the reflected radiation is focused back onto the laser, affecting the output of the laser. A focusing apparatus is not described in these publications.

Therefore, it is the problem of the invention to provide an automatic focusing apparatus which is simple in structure and yet highly accurate and reliable.

This problem is solved by an automatic focusing apparatus of the above defined type, whereby the radiation source is a semiconductor laser, the radiation reflected from the substrate is refocused by the lens onto the emitting part of the laser, the phase detector receives an output signal from the laser, and the laser is vibrated by the vibrating device.

Figure 1 shows a diagram of one embodiment of the present invention and

Figure 2 shows a diagram of a modified embodiment of the present invention.

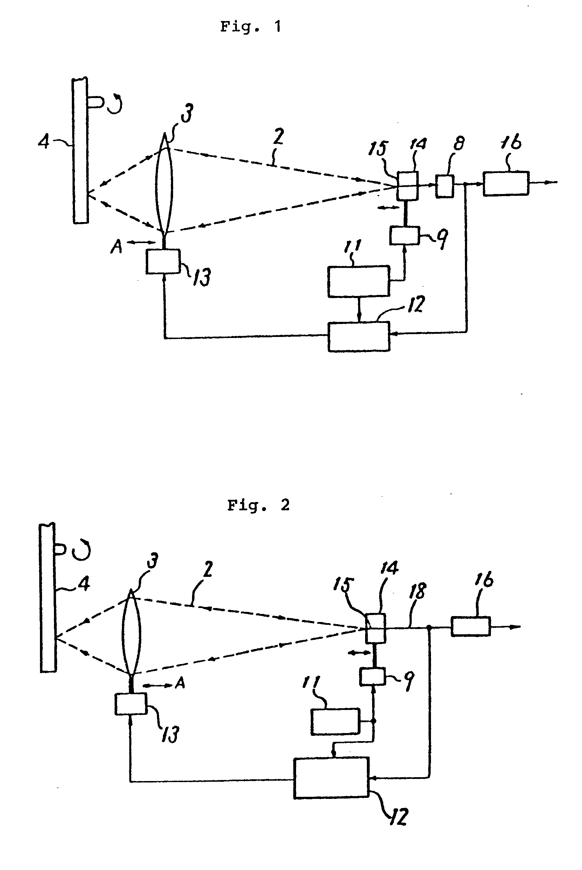

In Figure 1 the reference (14) designates a semiconductor laser source such as a GaAs double hetero-structure semiconductor laser; (15) designates an emitting part having pn junction.

In this embodiment, a video disc, in which video signal is optically recorded, is used as the object substrate (4). The reference (16) designates a circuit for processing the signal read-out from the video disc.

The ray (2) emitted from the semiconductor laser source (14) is focused through an objective lens (3) as the focusing means onto the surface of the video disc (4). The ray reflected on the surface of the video disc (4) is focused again by the objective lens (3) onto the emitting part (15) having the pn junction of the semiconductor laser source (14).

The output of the semiconductor ray source (14) is varied by the ray reflected from the disc 4. Thus, the variation of the output is detected by a ray detector (8) disposed at the rear part of the semiconductor laser source (14) and the signal is processed by the signal processing circuit (16) to carry out a video regeneration.

An oscillator (11) controls a vibrator (9) which causes the semiconductor laser source (14) to vibrate in the direction of the optical axis at a constant frequency f.

When the ray emitting part (15) is placed at the position for focusing onto the surface of the video disc (4), the ray reflected from the surface of the video disc (4) is substantially passed to the emitting part (15). However, when the surface of the video disc (4) is deviated from the focal point of the objective lens (3), the size of the reflected image focused onto the emitting part (15) is increased to spread beyond the emitting part (15), whereby the effective incident ray is reduced. Thus, when the semiconductor laser source (14) is vibrated in the optical axial direction, an effect similar to the vibrating pin-hole of the conventional apparatus can be expected in this apparatus.

The output of the ray detector (8) has a component of frequency 2f when the surface of the video disc (4) is at the focal point of the objective lens (3), whereas it has the component of frequency f when the surface of the video disc (4) deviates from the focal point. The phase of the frequency f is reversed depending upon the direction of the deviation from the focal point.

The output of the ray detector (8) is phase-detected by the phase detector (12) under rating the output of the oscillator (11). The object lens (3) is shifted by the detection output in the direction of the arrow line A through the actuator (13), whereby the focal point can be automatically focused onto the surface of the video disc (4).

In this embodiment, the rear radiation to the semiconductor laser source is detected. However, the forward radiation of the semiconductor laser source may also be detected by using a beam splitter.

Further in this embodiment, the ray detector is used by utilizing the variation of the output of the semiconductor ray source caused by the incident ray. However, the terminal voltage of the semiconductor laser source is also varied by the incident ray and accordingly, the terminal voltage variation output may also be utilized.

Figure 2 shows such an embodiment of the present invention. Again the semiconductor laser source (14) is vibrated at a constant frequency f in the direction of the optical axis. The terminal voltage variation of the semiconductor laser source (14) is caused by the reflected ray. It is passed to the phase detector (12), which carries out a phase detection with regard to the output of the oscillator (11) as a reference signal, whereby the actuator (13) is driven depending upon the detection output to control the position of the objective lens (13) in the optical axial direction. For example, a resistor is connected to a circuit of the semiconductor laser source, and the voltage applied between the terminals is measured to detect the terminal voltage of the semiconductor laser source, whereby the signal having the frequency 2f at the focusing position or the signal having the frequency f and the phase shift of $\pi$ near the focusing position are obtained. The phase detector (12) produces a signal proportional to the shift of the video disc. The polarity of the signal is adjusted and the signal is applied to the actuator to control the position of the objective lens (3) in the optical axial direction, whereby the focal point of the objective lens (3) can be always adjusted at the surface of the disc.

In accordance with the embodiment, the focal point can be always formed on the surface of the video disc.

The present invention can be applied not only as an automatic focusing apparatus for a video disc player, but also as an apparatus for detecting a surface shape of another optical recording medium or any substrate.

## Claim

An automatic focusing apparatus with a focusing lens (3) for focusing radiation from a source (14) onto a substrate (4), a vibrating device (9) for vibrating the focal spot with a predetermined frequency in the direction of the optical axis, an oscillator (11) for energizing the vibrating device, a phase detector (12) for comparing the radiation reflected from the substrate with a reference signal derived from the oscillator, and an actuator (13) which maintains coincidence between the focal spot and the surface of the substrate by positioning the lens in response to the output signal of the phase detector, characterized in that the radiation source is a semiconductor laser (14), the radiation reflected from the substrate is refocused by the lens onto the emitting part of the laser, the phase detector (12) receives an output signal from the laser, and the laser is vibrated by the vibrating device.

## Patentanspruch

Automatische Fokussiereinrichtung mit einer Fokussierlinse (3) zur Fokussierung der Strahlung einer Strahlungsquelle (14) auf ein Substrat (4), mit einer Vibrationseinrichtung (9) zur Vibration des Trennpunktes mit vorbestimmter Frequenz in Richtung der optischen Achse, mit einem Oszillator (11) zur Speisung der Vibrationseinrichtung, mit einem Phasendetektor (12) zum Vergleich der vom Substrat reflektierten Strahlung mit einem Referenzsignal, welches vom Oszillator abgeleitet wird, und mit einer Betätigungseinrichtung (13), welche die Koinzidenz zwischen dem Brennpunkt und der Oberfläche des Substrat zur Positionierung der Linse ansprechend auf das Ausgangssignal des Phasendetektors, dadurch gekennzeichnet, daß die Strahlungsquelle ein Halbleiterlaser (14) ist, daß die vom Substrat reflektierte Strahlung wiederum durch die Linse auf den emittierenden Teil des Lasers fokussiert wird, daß der Phasendetektor (12) ein Ausgangssignal vom Laser empfängt und daß der Laser durch die Vibrationseinrichtung vibriert wird.

## Revendication

Appareil de focalisation automatique comportant un objectif (3) pour focaliser des radiations issues d'une source (14) sur un substrat (4), un dispositif (9) pour faire vibrer le spot focal à une fréquence déterminée dans la direction de l'axe optique, un oscillateur (11) pour exciter le dispositif vibrant, un détecteur de phase (12) pour comparer la radiation réfléchie par le substrat avec un signal de référence provenant de l'oscillateur, et un actionneur (13) qui maintient la coïncidence entre le spot focal et la surface du substrat en positionnant l'objectif en réponse au signal de sortie du détecteur de phase, caractérisé en ce que la source de radiations est un laser à semi-conducteur (14), les radiations réfléchies par le substrat étant refocalisées par l'objectif sur la partie émissive du laser, le détecteur de phase (12) reçoit un signal de sortie du laser, et le laser est vibré par la dispositif vibrant.

Fig. 1

Fig. 2